# EUROPÄISCHE PATENTSCHRIFT

(11) **EP 1 604 071 B1**
(45) Veröffentlichungstag und Bekanntmachung des Hinweises auf die Patenterteilung: **23.08.2006**
(21) Anmeldenummer: 04717625.0
(22) Anmeldetag: 05.03.2004
(51) Int. Cl.: E03C 1/10, F16K 15/06

(54) **RÜCKFLUSSVERHINDERER**
DEVICE FOR PREVENTING BACKFLOW
DISPOSITIF DESTINE A EMPECHER LE REFLUX

(30) Priorität: 14.03.2003 DE 10311252
(43) Veröffentlichungstag der Anmeldung: 14.12.2005
(73) Patentinhaber: Alfred Kärcher GmbH & Co. KG, 71364 Winnenden (DE)
(72) Erfinder: NATHAN, Robert, 71522 Backnang (DE)
(74) Vertreter: Boehme, Ulrich
(86) Internationale Anmeldenummer: PCT/EP2004/002234
(87) Internationale Veröffentlichungsnummer: WO 2004/081301

(56) Entgegenhaltungen:
- DE-A- 2 157 363
- DE-A- 2 414 893
- DE-A- 2 424 978
- DE-A- 19 854 951
- US-A- 6 050 295

## Beschreibung

Die Erfindung betrifft einen Rückflußverhinderer mit einem einen Zulauf und einen Ablauf aufweisenden, einen vom Zulauf zum Ablauf führenden Strömungsweg bildenden Gehäuse, mit zwei in Strömungsrichtung öffnenden, hintereinander geschalteten Rückschlagventilen im Strömungsweg, mit einem aus dem Zwischenraum zwischen den beiden Rückschlagventilen austretenden Ablaufkanal, mit einem den Ablaufkanal verschließenden, im Gehäuse diesem gegenüber abgedichtet verschiebbaren Ventilkörper, der unter der Wirkung einer Feder in eine den Ablaufkanal freigebende Offenstellung und bei durchströmtem Gehäuse gegen die Wirkung der Feder in eine Schließstellung verschoben wird und der das stromaufwärts angeordnete Rückschlagventil in sich aufnimmt, wobei zur Abdichtung des Ventilkörpers gegenüber dem Gehäuse eine Membrandichtung vorgesehen ist, deren äußerer Randbereich an der Innenwand des Gehäuses abgedichtet festgelegt ist und deren innerer Randbereich innerhalb einer Dichtkante des Ventilkörpers an diesem dichtend festgelegt ist.

Derartige Rückflußverhinderer sind beispielsweise bekannt aus der DE 198 54 951 A1, der DE 21 57 363 A1, der DE 24 24 978 A1 oder der

### EP 1 022 398 A1.

Bei diesen bekannten Konstruktionen müssen eine größere Anzahl von Ringdichtungen verwendet werden, um den Ventilkörper gegenüber dem Gehäuse abzudichten und um in der Schließstellung des Ventilkörpers die Dichtung gegenüber dem entsprechenden Ventilsitz vorzunehmen.

In der DE 24 14 893 C2 ist ein gattungsgemäßer Rückflußverhinderer beschrieben, bei dem der Ventilkörper über eine Membrandichtung gegenüber dem Gehäuse abgedichtet ist, für den Verschluß des Ablaufkanals ist jedoch eine weitere Ringdichtung notwendig.

Es ist Aufgabe der Erfindung, den Aufbau eines gattungsgemäßen Rückflußverhinderers insbesondere im Dichtungsbereich zu vereinfachen.

Diese Aufgabe wird bei einem Rückflußverhinderer der eingangs beschriebenen Art erfindungsgemäß dadurch gelöst, daß die Membrandichtung sich über die Dichtkante legt und der Ventilkörper in seiner Schließstellung mit der Dichtkante unter Zwischenlage der Membrandichtung an einem Dichtsitz des Gehäuses anliegt.

Es werden also bekannte Ringdichtungen durch eine Membrandichtung ersetzt, die eine Doppelfunktion übernimmt. Diese Membrandichtung dichtet nämlich einmal den Ventilkörper gegenüber dem Gehäuse ab und zum anderen wirkt sie als Dichtung im Ventilbereich, da sie den Ventilkörper gegenüber dem Dichtsitz abdichtet, wenn der Ventilkörper in die Schließstellung verschoben wird. Diese zweite Funktion wird dadurch erreicht, daß die Membran die Dichtkante des Ventilkörpers überdeckt und damit in der Schließstellung immer zwischen dieser Dichtkante und dem Dichtsitz liegt.

Günstig ist es, wenn der äußere Randbereich der Membrandichtung zwischen zwei miteinander verbundenen Teilen des Gehäuses eingespannt ist.

Es kann weiterhin vorgesehen sein, daß der innere Randbereich der Membrandichtung zwischen zwei miteinander verbundenen Teilen des Ventilkörpers eingespannt ist.

Bei einer besonders bevorzugten Ausführungsform ist vorgesehen, daß der Abflußkanal im Dichtbereich angeordnet ist, in dem die Dichtkante die Membrandichtung gegen den Dichtsitz des Gehäuses drückt. Dadurch wird die Membrandichtung über den Dichtkanal gelegt und gegen diesen gedrückt, dies ergibt eine besonders zuverlässige Abdichtung des Abflußkanals.

Es kann weiterhin vorgesehen werden, daß die Membrandichtung im Dichtbereich zwischen Dichtkante und Dichtsitz des Gehäuses eine größere Materialdicke aufweist als in den übrigen Bereichen. Man verwendet also eine Membrandichtung, die gerade in dem Bereich, in dem die Membrandichtung zwischen Dichtkante und Dichtsitz zu liegen kommt, besonders dick ist und daher eine optimale Dichtwirkung garantiert, insbesondere auch beim Auftreten von Fertigungstoleranzen.

Grundsätzlich kann die beschriebene Konstruktion bei Rückflußverhinderern unterschiedlicher Bauart verwendet werden. Besonders vorteilhaft ist jedoch eine Anordnung, bei der der Rückflußverhinderer nicht nur in Kombination mit druckbelasteten Versorgungsleitungen eingesetzt werden kann, sondern auch in Verbindung mit drucklosen Versorgungssystemen, beispielsweise im Saugbetrieb aus einem See oder einem Vorratsbehälter.

Um dies zu ermöglichen, kann bei einer besonders bevorzugten Ausführungsform erfindungsgemäß vorgesehen sein, daß der Rückflußverhinderer eine Blockiereinrichtung aufweist, die in den Rückflußverhinderer einführbar ist und im eingeführten Zustand die beiden Rückschlagventile in Offenstellung und den Ventilkörper in Schließstellung festlegt.

Stattet man den Rückflußverhinderer mit einer solchen Blockiereinrichtung aus, dann wird der Rückflußverhinderer auf Durchgang geschaltet und der Ablaufkanal wird verschlossen, so daß der Rückflußverhinderer eintretende Flüssigkeit ohne Verlust durchströmen läßt, jedoch keine Rückschlagwirkung zeigt.

Wenn man die Blockiereinrichtung aktiviert, ist somit ein Verbraucher mit einem solchen Rückflußverhinderer für den Saugbetrieb ausgestattet, deaktiviert man die Blockiereinrichtung dagegen, erhält man einen herkömmlichen Rückflußverhinderer mit doppelter Rückschlagwirkung.

Grundsätzlich ist es möglich, daß die Blockiereinrichtung separate Mittel umfaßt, um jedes der Rückschlagventile zu öffnen und in der Offenstellung zu halten und zusätzlich den Ventilkörper in die Schließstellung zu verschieben und dort zu halten.

Besonders vorteilhaft ist jedoch, wenn gemäß einer bevorzugten Ausführungsform das Rückschlagventil im Ventilkörper bei seiner Verschiebung in die Offenstellung und bei in Schließstellung verschobenem Ventilkörper über ein Betätigungselement das andere Rückschlagventil in Offenstellung verschiebt. Dann genügt es, das eine Rückschlagventil in Offenstellung zu verschieben und in dieser zu halten, und man erhält gleichzeitig beim zweiten Rückschlagventil eine dauerhafte Verschiebung in Offenstellung.

Beispielsweise kann dies dadurch realisiert werden, daß die Schließkörper der beiden Rückschlagventile achsparallel zueinander verschiebbar sind, insbesondere koaxial zueinander, und daß das Betätigungselement eine Verlängerung ist, die eine kraftschlüssige Verbindung zwischen den Schließkörpern herstellt, sobald der Ventilkörper in Schließstellung steht und der Schießkörper im Rückschlagventil des Ventilkörpers in Offenstellung verschoben wird, während eine solche kraftschlüssige Verbindung unabhängig von der Stellung des Schließkörpers im Ventilkörper nicht hergestellt wird, wenn der Ventilkörper in Offenstellung steht.

Die Abmessungen können auch so gewählt werden, daß auch dann, wenn der Ventilkörper in Schließstellung steht, die kraftschlüssige Verbindung zwischen den Schließkörpern erst hergestellt wird, wenn der Schließkörper im Ventilkörper nicht nur von seinem Ventilsitz abgehoben worden ist, sondern über eine bestimmte Strecke von dem Ventilsitz entfernt ist. Dadurch kann sichergestellt werden, daß im normalen Druckbetrieb das stromabwärts gelegene Rückschlagventil auch dann in die Schießstellung gelangen kann, wenn der Ventilkörper in Schließstellung steht und das darin angeordnete Rückschlagventil in Offenstellung. Mit anderen Worten muß bei dieser Ausgestaltung der Schließkörper im Ventilkörper über eine Strecke verschoben werden, die größer ist als seine normale Öffnungsbewegung, um zusätzlich auch den Schließkörper des stromabwärts gelegenen Rückschlagventils in Offenstellung zu verschieben.

Die Verlängerung kann eine Schubstange sein, die vorzugsweise Teil des Schließkörpers im Ventilkörper ist.

Bei einer bevorzugten Ausführungsform ist vorgesehen, daß die Blockiereinrichtung ein Schubelement umfaßt, welches in Öffnungsrichtung des Schließkörpers des Rückschlagventils verschiebbar und an diesen Schließkörper im Ventilkörper anlegbar ist. Dabei kann es sich um eine Schubstange handeln, die abgedichtet durch die Wand des Gehäuses hindurchgeführt ist.

Bei einer besonders bevorzugten Ausführungsform ist das Schubelement durch den Zulauf hindurch in das Gehäuse einführbar.

Insbesondere kann das Schubelement ein Rohrstück sein.

Dieses Rohrstück ist bei einer bevorzugten Ausführungsform ein Anschlußstutzen an den Zulauf, der mit einer Versorgungsleitung in Verbindung stehen kann. Wenn also dieses spezielle Rohrstück in die Zufuhr eingesetzt wird, verschiebt es automatisch den Ventilkörper in Schließstellung und die Schließkörper der Rückschlagventile in Offenstellung.

Die Versorgungsleitung kann eine spezielle Saugleitung sein und an ihrem dem Anschlußstutzen gegenüberliegenden Ende einen Saugkopf tragen, durch den ein Anschluß an ein unter Druck stehendes Versorgungssystem ausgeschlossen ist.

Damit kann sichergestellt sein, daß eine solche Versorgungsleitung mit einem den Rückflußverhinderer unwirksam schaltenden Anschlußstutzen nicht versehentlich mit einem Versorgungssystem verbunden wird, das unter Druck steht und bei dem der Rückflußverhinderer wirksam sein muß. Bei Verwendung normaler Anschlußstutzen, wie sie üblicherweise zur Verbindung mit einem Versorgungssystem verwendet werden, erfolgt keine Verschiebung von Ventilkörper und Schließkörpern der Rückschlagventile, so daß beim Einsetzen normaler Anschlußstücke der Rückflußverhinderer in der üblichen Weise wirksam bleibt. Nur beim Einsetzen eines speziellen Anschlußstutzens, der mit einer Saugleitung verbunden ist und der nicht an ein Druckversorgungssystem angeschlossen werden kann, erfolgt die Überbrückung der Rückschlagventile und damit die Einstellung des Rückflußverhinderers für den Saugbetrieb.

Der Schließkörper im Ventilkörper kann einen seiner Öffnungsbewegung gegenüber dem Ventilkörper begrenzenden Anschlag aufweisen, so daß beim Vorschieben des Schubelementes über eine Strecke, die größer ist als der normale Öffnungshub des Schließkörpers im Ventilkörper, der Schließkörper den Ventilkörper in dessen Schließstellung verschiebt.

Bei einer anderen Ausführungsform ist vorgesehen, daß das Schubelement sich zunächst am Schließkörper des im Ventilkörper angeordneten Rückschlagventils anlegt und erst nach dessen Verschiebung in Offenstellung auch am Ventilkörper, so daß der Ventilkörper ebenfalls direkt vom Schubelement verschoben wird und nicht indirekt über den Schließkörper wie bei der vorstehend beschriebenen Ausgestaltung.

Beispielsweise kann der Schließkörper einen über den Ventilkörper hervorstehenden Vorsprung tragen, an dem das Schubelement zur Anlage kommt, so daß zunächst der Schließkörper verschoben wird und erst danach der Ventilkörper.

Die nachfolgende Beschreibung bevorzugter Ausführungsformen der Erfindung dient im Zusammenhang mit der Zeichnung der näheren Erläuterung. Es zeigen:
- Figur 1:: eine Längsschnittansicht eines Rückflußverhinderers mit zwei Rückschlagventilen in Ruhestellung;
- Figur 2:: eine Ansicht des Rückflußverhinderers der Figur 1 beim Anschluß an ein herkömmliches Druckversorgungssystem vor der Öffnung der Rückschlagventile und
- Figur 3:: eine Ansicht des Rückflußverhinderers der Figuren 1 und 2 mit einem eingesetzten Anschlußstutzen zur dauerhaften Öffnung der Rückschlagventile und zur dauerhaften Schließung des Abflußkanals.

Der in der Zeichnung dargestellte Rückflußverhinderer 1 wird an den Versorgungseingang eines Verbrauchergerätes angeschlossen, beispielsweise eines Hochdruckreinigungsgerätes oder eines anderen Gerätes, dem aus einer Versorgungsleitung Flüssigkeit zugeführt wird.

Der in der Zeichnung dargestellte Rückflußverhinderer weist ein Gehäuse 2 auf, das aus zwei Gehäuseteilen 3, 4 zusammengesetzt ist.

Das erste Gehäuseteil umfaßt einen Zufluß-Rohrstutzen 5, der sich glockenförmig in eine zylindrische Ventilkammer 6 öffnet, die an ihrem dem Zufluß-Rohrstutzen 5 gegenüberliegenden Ende offen ist und dort durch ein zweites haubenförmiges Gehäuseteil 4 verschlossen ist. Mit dem haubenförmigen Gehäuseteil 4 ist einstückig ein Abfluß-Rohrstutzen 7 verbunden, der im dargestellten Ausführungsbeispiel rechtwinklig abgewinkelt ist, der aber grundsätzlich auch geradlinig ausgeführt sein könnte.

Der haubenförmige Gehäuseteil 4 weist eine zentrale Öffnung 8 auf, die zum Abfluß-Rohrstutzen hin sich konisch erweitert und damit einen Ventilsitz 9 für einen Schließkörper 10 ausbildet, der in einer Führung 11 des Abfluß-Rohrstutzens 7 in Längsrichtung des Gehäuseteils 3 verschieblich gelagert ist und mittels einer einen Schaft 12 des Schließkörpers 10 umgebenden Druckfeder 13 in eine Schließstellung verschoben wird, in der der Schließkörper 10 mittels einer in einer Umfangsnut 14 eingelegten Ringdichtung 15 am Ventilsitz 9 anliegt und die Öffnung 8 verschließt. Gegen die Wirkung der Druckfeder 13 kann der Schließkörper 10 vom Ventilsitz 9 abgehoben werden und dadurch die Öffnung 8 freigeben. Der Schließkörper 10 bildet zusammen mit dem Ventilsitz 9 ein entgegen der Durchströmrichtung des Rückflußverhinderers 1 öffnendes Rückschlagventil.

Die Führung 11 ist Teil eines Verschlußstopfens 11a, der in den abgewinkelten Teil des Abfluß-Rohrstutzens 7 eingesetzt ist und der eine entsprechende Öffnung in dem Abfluß-Rohrstutzen 7 verschließt, durch diese Öffnung kann die Montage der Einzelteile erfolgen.

An der Seitenwand des haubenförmigen Gehäuseteils 4 befindet sich ein Ablaufkanal 16, der den Innenraum des Gehäuseteils 4 mit der Umgebung verbindet und wie im dargestellten Ausführungsbeispiel als einfache Öffnung in der Wand des Gehäuseteils 4 ausgebildet sein kann.

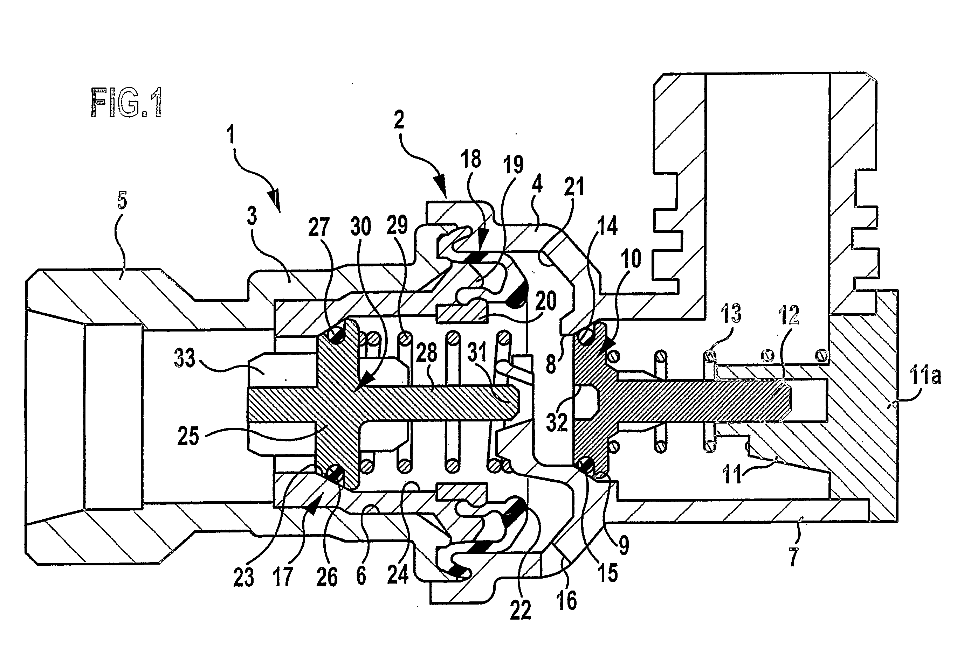

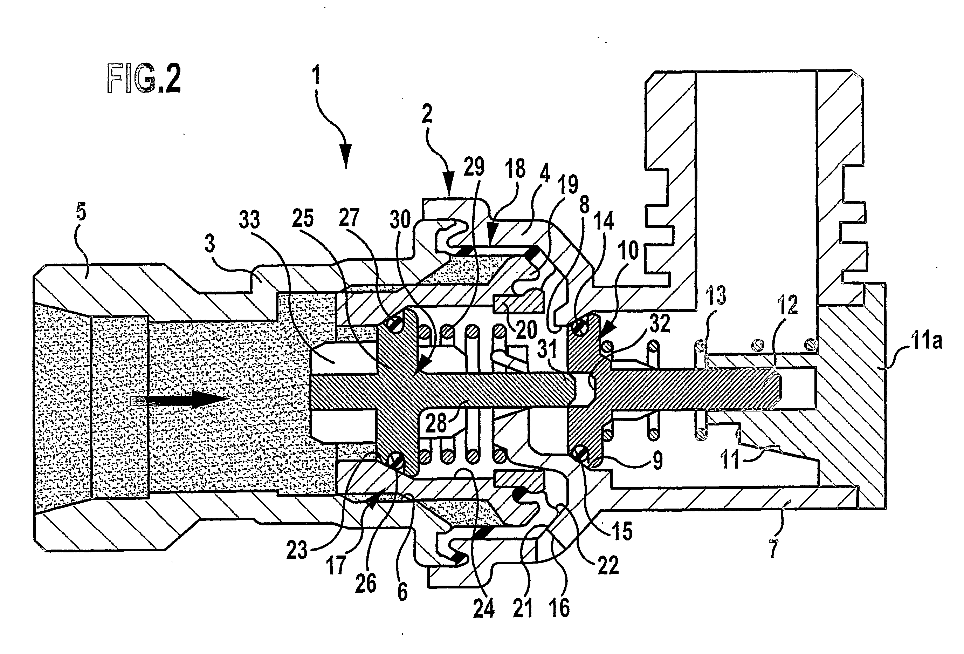

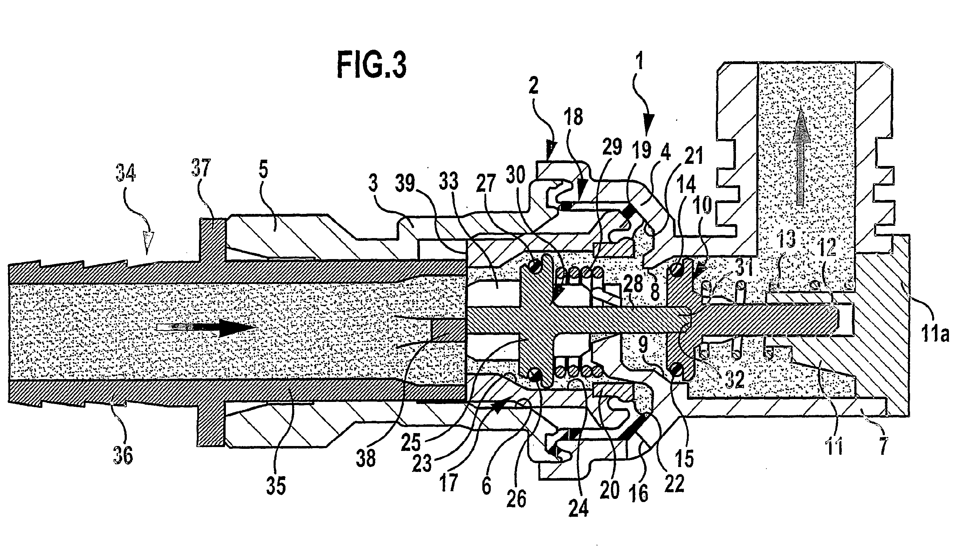

In der zylindrischen Ventilkammer 6 ist ein Ventilkörper 17 in Längsrichtung verschieblich gelagert. Dieser Ventilkörper 17 ist gegenüber dem Gehäuse 2 mittels einer Membrandichtung 18 abgedichtet. Der äußere Randbereich dieser Membrandichtung 18 ist zwischen den beiden Gehäuseteilen 3, 4 eingespannt, diese können beispielsweise miteinander verschraubt sein. Der innere Randbereich der Membrandichtung 18 ist am ausströmseitigen Ende des Ventilkörpers 17 an dessen Innenseite eingespannt, und zwar zwischen einem als Dichtkante 19 ausgebildeten Randbereich des Ventilkörpers 17 einerseits und einem in den Ventilkörper 17 eingesetzten Spannring 20 andererseits, der beispielsweise in den Ventilkörper 17 eingeschraubt sein kann. Dabei überdeckt die Membrandichtung 18 die Dichtkante 19, solange sich der Ventilkörper 17 in der Offenstellung befindet, hält die Membrandichtung 18 einen Abstand zu der Dichtkante 19 ein, wenn aber der Ventilkörper 17 in die Schließstellung verschoben wird, dann legt sich die Membrandichtung 18 außen an die Dichtkante 19 an. In der Schließstellung wird die Membrandichtung 18 zwischen dieser Dichtkante 19 und einem Dichtsitz 21 an der Innenseite des Gehäuseteils 4 eingespannt, dieser Dichtsitz 21 ist ein sich konisch verengender Wandbereich. Die Membrandichtung 18 bildet dann das Dichtelement zwischen der Dichtkante 19 einerseits und diesem Dichtsitz 21 andererseits. Der in diesem Bereich angeordnete Teil der Membrandichtung bildet eine Verdickung 22 aus, d. h. die Membrandichtung 18 ist in diesem Teilbereich dicker ausgebildet als in den übrigen Bereichen. Dadurch ergibt sich eine zuverlässige Abdichtung zwischen Dichtkante 19 einerseits und Dichtsitz 21 andererseits. Außerdem überdeckt die Verdikkung 22 den Ablaufkanal 16, wenn der Ventilkörper 17 in Schließstellung steht (Figuren 2 und 3), die Membrandichtung 18 ist jedoch von dem Ablaufkanal 16 abgehoben, wenn der Ventilkörper 17 in die Offenstellung verschoben ist (Fig. 1).

Der Ventilkörper 17 ist hülsenförmig ausgebildet und weist einen sich von der Zuflußseite konisch erweiternden Dichtbereich 23 und einen sich daran anschließenden kreiszylindrischen Abschnitt 24 auf. In dem dadurch gebildeten Innenraum ist ein Schließkörper 30 in Längsrichtung verschieblich gelagert, der im wesentlichen gleich aufgebaut ist wie der Schließkörper 10, in einem scheibenförmigen Kopfteil 25 ist in einer Umfangsnut 26 eine Ringdichtung 27 eingelegt, an das Kopfteil 25 schließt sich ein zentraler, eine Verlängerung ausbildender Schaft 28 an, und dieser Schaft wird von einer Druckfeder 29 umgeben, welche sich einerseits am haubenförmigen Gehäuseteil 4 und andererseits an dem tellerförmigen Kopfteil 25 abstützt und dadurch den Schließkörper 30 dichtend gegen den Dichtbereich 23 drückt, die Dichtung wird dabei durch die Anlage der Ringdichtung 27 am Dichtbereich 23 hervorgerufen. Der Schließkörper 30 und der Dichtbereich 23 bilden ein zweites Rückschlagventil.

Die Druckfeder 29 hat nicht nur die Wirkung, daß der Schließkörper 30 in die Schließstellung in dichtende Anlage am Dichtbereich 23 verschoben wird, sondern durch die Druckfeder 29 wird auch über den am Dichtbereich 23 anliegenden Schließkörper 30 der Ventilkörper 17 in seine Offenstellung verschoben, diese Offenstellung ist in Figur 1 dargestellt.

Der Schaft 28 ist so lang ausgebildet, daß sein dem tellerförmigen Kopfteil 25 gegenüberliegendes Ende 31 am Schließkörper 10 zur Anlage kommt, wenn der Ventilkörper 17 in Schließstellung steht und wenn der Schließkörper 30 in Offenstellung verschoben ist. Zu diesem Zweck ist im Schließkörper 30 eine Vertiefung 32 vorgesehen, in die das zugespitzte Ende 31 des Schaftes 28 eingreifen kann.

Am tellerförmigen Kopfteil 25 des Schließkörpers 30 sind zentral einige in Richtung auf den Zufluß-Rohrstutzen 5 weisende Vorsprünge 33 angeordnet, die bei geschlossenem Schließkörper 30 über den zuflußseitigen Rand des Ventilkörpers 17 geringfügig vorstehen.

Im normalen Betrieb wird der Verbraucher mittels des Rückflußverhinderers an einer Versorgungsleitung angeschlossen, in der Flüssigkeit mit Überdruck zur Verfügung gestellt wird. Dann arbeitet der Rückflußverhinderer 1 wie ein bekannter Rückflußverhinderer. Vor der Öffnung des Versorgungsleitungssystemes befinden sich der Ventilkörper 17 in Offenstellung und die beiden Rückschlagventile in Schließstellung. Diese Stellung ist in Figur 1 dargestellt. Sobald die Versorgungsleitung geöffnet wird, verschiebt der Druck der einströmenden Flüssigkeit den Ventilkörper in die Schließstellung, diese Stellung ist in Figur 2 dargestellt. Weiterhin öffnet dann die Flüssigkeit die beiden Rückschlagventile, und die Flüssigkeit kann dem Verbraucher zugeführt werden. Wenn im Verbraucher Druckspitzen auftreten, die ein Zurückströmen der Flüssigkeit veranlassen würden, schließen die Rückschlagventile und verhindern ein solches Rückströmen.

Wenn ein Gerät mit dem angeschlossenen Rückflußverhinderer im Saugbetrieb eingesetzt werden soll, wird in den Zufluß-Rohrstutzen 5 ein spezieller Anschlußstutzen 34 eingesetzt, wie dies in Figur 3 dargestellt ist. Der Anschlußstutzen 34 umfaßt auf einer Seite ein Rohrstück 35, welches in den Zufluß-Rohrstutzen 5 eingreift, und auf der anderen Seite beispielsweise einen Rohrnippel 36, auf den ein Saugschlauch aufgeschoben werden kann. Die Einschubtiefe kann durch einen umlaufenden Bund 37 begrenzt werden, außerdem ist das Rohrstück 35 an seiner Ausströmseite mit Querstegen 38 versehen, die zwar einen Durchtritt der Flüssigkeit nicht wesentlich behindern, die jedoch beim Einschieben des Rohrstückes 35 an den Vorsprüngen 33 des Schließkörpers 30 anliegen. Diese Anlage erfolgt, bevor das Rohrstück 35 vollständig eingeschoben ist. Beim weiteren Einschieben des Rohrstückes 35 wird daher der Schließkörper 30 entgegen der Wirkung der Druckfeder 29 in das Gehäuse 2 eingeschoben und öffnet dabei das stromaufwärts gelegene Rückschlagventil. Beim weiteren Einschieben des Rohrstückes 35 legt sich dieses an die einströmseitige Stirnkante 39 des Ventilkörpers 17 an und schiebt diesen ebenfalls in das Gehäuse 2 ein, bis der Ventilkörper 17 den Ablaufkanal 16 durch die auf den Ablaufkanal 16 aufgelegte Membrandichtung 18 verschließt. Bei dieser Vorschubbewegung wird natürlich auch der Schließkörper 30 weiter in das Gehäuse 2 eingeschoben und legt sich dabei mit seinem Schaft 28 an den Schließkörper 10 an, dieser wird dadurch in seine Offenstellung verschoben, so daß schließlich bei vollständig eingeschobenem Rohrstück 35 beide Rückschlagventile geöffnet sind und der Ablaufkanal 16 geschlossen. Diese Stellung ist in Figur 3 dargestellt. In dieser Stellung kann angesaugte Flüssigkeit den Rückflußverhinderer 1 ungestört durchströmen, allerdings ist die Wirkung der Rückschlagventile aufgehoben, so daß ein Saugbetrieb überhaupt möglich wird.

Man kann daher denselben Rückflußverhinderer 1 wahlweise zum Betrieb in einem Druckversorgungssystem und in einem drucklosen Versorgungssystem einsetzen, in letzterem wird durch Verwendung des speziellen Anschlußstutzens 34 die Wirkung der Rückschlagventile aufgehoben, außerdem wird der Ventilkörper 17 durch den Anschlußstutzen 34 in seine Schließstellung verschoben. Sobald der Anschlußstutzen 34 wieder aus dem Gehäuse 2 entfernt wird, beispielsweise durch Herausschrauben, kehren alle Teile in die Ruhestellung zurück, die in Figur 1 dargestellt ist, so daß der Rückflußverhinderer 1 nunmehr in der üblichen Weise wieder mit einem druckbelasteten Versorgungssystem verwendet werden kann, bei dem natürlich kein Anschlußstutzen verwendet werden darf, der wie anhand des Anschlußstutzens 34 erörtert den Ventilkörper sowie die beiden Schließkörper verschiebt, diese Verschiebung muß bei druckbelastetem System allein durch den Druck der strömenden Flüssigkeit erfolgen.

## Patentansprüche

1. Rückflußverhinderer (1) mit einem einen Zulauf und einen Ablauf aufweisenden, einen vom Zulauf zum Ablauf führenden Strömungsweg bildenden Gehäuse (2), mit zwei in Strömungsrichtung öffnenden, hintereinander geschalteten Rückschlagventilen im Strömungsweg, mit einem aus dem Zwischenraum zwischen den beiden Rückschlagventilen austretenden Ablaufkanal (16), mit einem den Ablaufkanal (16) verschließenden, im Gehäuse (2) diesem gegenüber abgedichtet verschiebbaren Ventilkörper (17), der unter der Wirkung einer Feder in eine den Ablaufkanal (16) freigebende Offenstellung und bei durchströmtem Gehäuse (2) gegen die Wirkung der Feder in eine Schließstellung verschoben wird und der das stromaufwärts angeordnete Rückschlagventil in sich aufnimmt, wobei zur Abdichtung des Ventilkörpers (17) gegenüber dem Gehäuse (2) eine Membrandichtung (18) vorgesehen ist, deren äußerer Randbereich an der Innenwand des Gehäuses (2) abgedichtet festgelegt ist und deren innerer Randbereich innerhalb einer Dichtkante (19) des Ventilkörpers (17) an diesem dichtend festgelegt ist, **dadurch gekennzeichnet, daß** die Membrandichtung (18) sich über die Dichtkante (19) legt und der Ventilkörper (17) in seiner Schließstellung mit der Dichtkante (19) unter Zwischenlage der Membrandichtung (18) an einem Dichtsitz (21) des Gehäuses (2) anliegt.

2. Rückflußverhinderer nach Anspruch 1, **dadurch gekennzeichnet, daß** der äußere Randbereich der Membrandichtung (18) zwischen zwei miteinander verbundenen Teilen (3, 4) des Gehäuses (2) eingespannt ist.

3. Rückflußverhinderer nach Anspruch 1 oder 2, **dadurch gekennzeichnet, daß** der innere Randbereich der Membrandichtung (18) zwischen zwei miteinander verbundenen Teilen (19, 20) des Ventilkörpers (17) eingespannt ist.

4. Rückflußverhinderer nach einem der voranstehenden Ansprüche, **dadurch gekennzeichnet, daß** der Ablaufkanal (16) im Dichtbereich angeordnet ist, in dem die Dichtkante (19) die Membrandichtung (18) gegen den Dichtsitz (21) des Gehäuses (2) drückt.

5. Rückflußverhinderer nach einem der voranstehenden Ansprüche, **dadurch gekennzeichnet, daß** die Membrandichtung (18) im Dichtbereich zwischen Dichtkante (19) und Dichtsitz (21) des Gehäuses (2) eine größere Materialdicke aufweist als in den übrigen Bereichen.

6. Rückflußverhinderer nach einem der voranstehenden Ansprüche, **dadurch gekennzeichnet, daß** er eine Blockiereinrichtung (34, 35) aufweist, die in den Rückflußverhinderer einführbar ist und im eingeführten Zustand die beiden Rückschlagventile (9, 20; 23, 30) in Offenstellung und den Ventilkörper (17) in Schließstellung festlegt.

7. Rückflußverhinderer nach Anspruch 6, **dadurch gekennzeichnet, daß** das Rückschlagventil (23, 30) im Ventilkörper (17) bei seiner Verschiebung in die Offenstellung und bei in Schließstellung verschobenem Ventilkörper (17) über ein Betätigungselement (28) das andere Rückschlagventil (9, 10) in Offenstellung verschiebt.

8. Rückflußverhinderer nach Anspruch 7, **dadurch gekennzeichnet, daß** die Schließkörper (10, 30) der beiden Rückschlagventile achsparallel zueinander verschiebbar sind und daß das Betätigungselement eine Verlängerung (28) ist, die eine kraftschlüssige Verbindung zwischen den Schließkörpern (10, 30) herstellt, sobald der Ventilkörper (17) in Schließstellung steht und der Schließkörper (30) im Rückschlagventil des Ventilkörpers (17) in Offenstellung verschoben wird, während eine solche kraftschlüssige Verbindung unabhängig von der Stellung des Schließkörpers (30) im Ventilkörper (17) nicht hergestellt wird, wenn der Ventilkörper (17) in Offenstellung steht.

9. Rückflußverhinderer nach Anspruch 8, **dadurch gekennzeichnet, daß** die Schließkörper (10, 30) der beiden Rückschlagventile koaxial zueinander verschiebbar sind.

10. Rückflußverhinderer nach einem der Ansprüche 8 oder 9, **dadurch gekennzeichnet, daß** die Verlängerung eine Schubstange (28) ist.

11. Rückflußverhinderer nach einem der Ansprüche 8 bis 10, **dadurch gekennzeichnet, daß** die Verlängerung (28) Teil des Schließkörpers (30) im Ventilkörper (17) ist.

12. Rückflußverhinderer nach einem der Ansprüche 6 bis 11, **dadurch gekennzeichnet, daß** die Blockiereinrichtung ein Schubelement (34) umfaßt, welches in Öffnungsrichtung des Schließkörpers(30) des Rückschlagventils verschiebbar und an diesen Schließkörper (30) im Ventilkörper (17) anlegbar ist.

13. Rückflußverhinderer nach Anspruch 12, **dadurch gekennzeichnet, daß** das Schubelement (34) durch den Zulauf (5) hindurch in das Gehäuse (2) einführbar ist.

14. Rückflußverhinderer nach Anspruch 13, **dadurch gekennzeichnet, daß** das Schubelement ein Rohrstück (35) umfaßt.

15. Rückflußverhinderer nach Anspruch 14, **dadurch gekennzeichnet, daß** das Rohrstück (35) Teil eines Anschlußstutzens an den Zulauf (5) ist, der mit einer Versorgungsleitung in Verbindung stehen kann.

16. Rückflußverhinderer nach einem der Ansprüche 12 bis 15, **dadurch gekennzeichnet, daß** der Schließkörper (30) im Ventilkörper (17) einen seiner Öffnungsbewegung gegenüber dem Ventilkörper (17) begrenzenden Anschlag aufweist, so daß beim Vorschieben des Schubelementes (34) über eine Strecke, die größer ist als der Hub des Schließkörpers (30) im Ventilkörper (17), der Schließkörper (30) den Ventilkörper (17) in dessen Schließstellung verschiebt.

17. Rückflußverhinderer nach einem der Ansprüche 12 bis 15, **dadurch gekennzeichnet, daß** das Schubelement (34) sich zunächst am Schließkörper (30) des im Ventilkörper (17) angeordneten Rückschlagventils anlegt und erst nach dessen Verschiebung in Offenstellung auch am Ventilkörper (17).

18. Rückflußverhinderer nach Anspruch 17, **dadurch gekennzeichnet, daß** der Schließkörper (30) einen über den Ventilkörper (17) hervorstehenden Vorsprung (33) trägt, an dem das Schubelement (34) zur Anlage kommt.

## Claims

1. Device (1) for preventing backflow with a housing (2) having an inlet and an outlet and forming a flow path leading from the inlet to the outlet, two return valves in the flow path opening in the direction of flow and being connected one behind the other, a discharge channel (16) exiting from the intermediate space between the two return valves, a valve member (17) closing the discharge channel (16) and being displaceable in the housing (2) in a sealed manner in relation to it, said valve member being moved into an open position releasing the discharge channel (16) due to the action of a spring and into a closed position contrary to the action of the spring when the housing (2) has liquid flowing through it and said valve member accommodating in it the return valve arranged upstream, wherein a membrane seal (18) is provided for sealing the valve member (17) in relation to the housing (2), the outer edge area of said membrane seal being secured to the inner wall of the housing (2) in a sealed manner and its inner edge area being secured within a sealing edge (19) of the valve member (17) so as to be sealed against it, **characterized in that** the membrane seal (18) extends over the sealing edge (19) and the valve member (17) in its closed position abuts on a sealing seat (21) of the housing (2) with the sealing edge (19) with the membrane seal (18) interposed between them.

2. Device for preventing backflow as defined in claim 1, **characterized in that** the outer edge area of the membrane seal (18) is clamped between two parts (3, 4) of the housing (2) connected to one another.

3. Device for preventing backflow as defined in claim 1 or 2, **characterized in that** the inner edge area of the membrane seal (18) is clamped between two parts (19, 20) of the valve member (17) connected to one another.

4. Device for preventing backflow as defined in any one of the preceding claims, **characterized in that** the discharge channel (16) is arranged in the sealing area, the sealing edge (19) pressing the membrane seal (18) against the sealing seat (21) of the housing (2) in said sealing area.

5. Device for preventing backflow as defined in any one of the preceding claims, **characterized in that** the membrane seal (18) has a greater material thickness in the sealing area between sealing edge (19) and sealing seat (21) of the housing (2) than in the remaining areas.

6. Device for preventing backflow as defined in any one of the preceding claims, **characterized in that** it has a blocking device (34, 35) insertable into the device for preventing backflow and in the inserted position securing the two return valves (9, 20; 23, 30) in an open position and the valve member (17) in a closed position.

7. Device for preventing backflow as defined in claim 6, **characterized in that** the return valve (23, 30) in the valve member (17) moves the other return valve (9, 10) into an open position via an actuating element (28) during its displacement into the open position and with the valve member (17) moved into a closed position.

8. Device for preventing backflow as defined in claim 7, **characterized in that** the closing members (10, 30) of the two return valves are displaceable axially parallel to one another and that the actuating element is an extension (28) providing a force-locking connection between the closing members (10, 30) as soon as the valve member (17) is in a closed position and the closing member (30) in the return valve of the valve member (17) is moved into an open position whereas such a force-locking connection is not provided irrespective of the position of the closing member (30) in the valve member (17) when the valve member (17) is in an open position.

9. Device for preventing backflow as defined in claim 8, **characterized in that** the closing members (10, 30) of the two return valves are displaceable coaxially to one another.

10. Device for preventing backflow as defined in one of claims 8 or 9, **characterized in that** the extension is a push rod (28).

11. Device for preventing backflow as defined in any one of claims 8 to 10, **characterized in that** the extension (28) is part of the closing member (30) in the valve member (17).

12. Device for preventing backflow as defined in any one of claims 6 to 11, **characterized in that** the blocking device contains a push element (34) displaceable in the opening direction of the closing member (30) of the return valve and adapted to abut on this closing member (30) in the valve member (17).

13. Device for preventing backflow as defined in claim 12, **characterized in that** the push element (34) is insertable into the housing (2) through the inlet (5).

14. Device for preventing backflow as defined in claim 13, **characterized in that** the push element includes a piece of pipe (35).

15. Device for preventing backflow as defined in claim 14, **characterized in that** the piece of pipe (35) is part of a short connection pipe to the inlet (5) able to communicate with a supply line.

16. Device for preventing backflow as defined in any one of claims 12 to 15, **characterized in that** the closing member (30) in the valve member (17) has a stop limiting its opening movement in relation to the valve member (17) so that during the advancing of the push element (34) over a distance greater than the stroke of the closing member (30) in the valve member (17) the closing member (30) moves the valve member (17) into its closed position.

17. Device for preventing backflow as defined in any one of claims 12 to 15, **characterized in that** the push element (34) abuts first of all on the closing member (30) of the return valve arranged in the valve member (17) and also on the valve member (17) only after its displacement into an open position.

18. Device for preventing backflow as defined in claim 17, **characterized in that** the closing member (30) bears a projection (33) protruding beyond the valve member (17), the push element (34) coming to rest on said projection.

## Revendications

1. Dispositif anti-reflux (1) comportant un boîtier (2) présentant une entrée et une sortie et formant un trajet d'écoulement menant de l'entrée vers la sortie, comportant deux clapets antiretour ouvrant dans la direction d'écoulement et branchés l'un derrière l'autre dans le trajet d'écoulement, un canal de sortie (16) sortant de l'espace intermédiaire entre les deux clapets antiretour, un corps de valve (17) refermant le canal de sortie (16) et mobile dans le boîtier (2) en étant étanché par rapport à celui-ci, corps qui est déplacé sous l'effet d'un ressort jusque dans une position d'ouverture libérant le canal de sortie (16) et qui est déplacé à l'encontre de l'effet du ressort jusque dans une position de fermeture lorsque le boîtier (2) est traversé par un fluide, et qui reçoit en lui-même le clapet antiretour agencé en amont, et un joint à membrane (18) est prévu pour étancher le corps de valve (17) par rapport au boîtier (2), joint dont la zone de bord extérieure est immobilisée avec étanchement sur la paroi intérieure du boîtier (2) et dont la zone de bord intérieure est immobilisée à l'intérieur d'une arête d'étanchéité (19) du corps de valve (17) avec étanchement sur celui-ci, **caractérisé en ce que** le joint à membrane (18) vient se poser sur l'arête d'étanchéité (19) et le corps de valve (17), dans sa position de fermeture, prend appui contre un siège d'étanchéité (21) du boîtier (2) par l'arête d'étanchéité (19) avec interposition du joint à membrane (18).

2. Dispositif anti-reflux selon la revendication 1, **caractérisé en ce que** la zone de bord extérieure du joint à membrane (18) est serrée entre deux parties (3, 4) du boîtier (2) reliées l'une à l'autre.

3. Dispositif anti-reflux selon la revendication 1 ou 2, **caractérisé en ce que** la zone de bord intérieure du joint à membrane (18) est serrée entre deux parties (19, 20) du corps de valve (17) reliées l'une à l'autre.

4. Dispositif anti-reflux selon l'une des revendications précédentes, **caractérisé en ce que** le canal de sortie (16) est agencé dans la zone d'étanchéité dans laquelle l'arête d'étanchéité (19) presse le joint à membrane (18) contre le siège d'étanchéité (21) du boîtier (2).

5. Dispositif anti-reflux selon l'une des revendications précédentes, **caractérisé en ce que** dans la zone d'étanchéité entre l'arête d'étanchéité (19) et le siège d'étanchéité (21) du boîtier (2), le joint à membrane (18) présente une épaisseur supérieure à celle dans les autres zones.

6. Dispositif anti-reflux selon l'une des revendications précédentes, **caractérisé en ce qu'**il comprend un organe de blocage (34, 35) qui est susceptible d'être introduit dans le dispositif anti-reflux et qui, dans l'état introduit, immobilise les deux clapets antiretour (9, 20 ; 23, 30) dans la position d'ouverture et qui immobilise le corps de valve (17) dans la position de fermeture.

7. Dispositif anti-reflux selon la revendication 6, **caractérisé en ce que** lors de son déplacement dans la position d'ouverture et lorsque le corps de valve (17) est déplacé jusque dans la position de fermeture, le clapet antiretour (23, 30) dans le corps de valve (17) déplace l'autre clapet antiretour (9, 10) dans la position d'ouverture via un élément d'actionnement (28).

8. Dispositif anti-reflux selon la revendication 7, **caractérisé en ce que** les corps de fermeture (10, 30) des deux clapets antiretour sont mobiles l'un par rapport à l'autre parallèlement à leur axe, et **en ce que** l'élément d'actionnement est un prolongement (28) qui établit une liaison en coopération de forces entre les corps de fermeture (10, 30) dès que le corps de valve (17) est en position de fermeture, et le corps de fermeture (30) dans le clapet antiretour du corps de valve (17) est déplacé dans la position d'ouverture, tandis qu'une telle liaison en coopération de forces n'est pas établie, indépendamment de la position du corps de fermeture (30) dans le corps de valve (17), si le corps de valve (17) est en position d'ouverture.

9. Dispositif anti-reflux selon la revendication 8, **caractérisé en ce que** les corps de fermeture (10, 30) des deux clapets antiretour sont mobiles coaxialement l'un par rapport à l'autre.

10. Dispositif anti-reflux selon l'une des revendications 8 ou 9, **caractérisé en ce que** le prolongement est une barre de poussée (28).

11. Dispositif anti-reflux selon l'une des revendications 8 à 10, **caractérisé en ce que** le prolongement (28) fait partie du corps de fermeture (30) dans le corps de valve (17).

12. Dispositif anti-reflux selon l'une des revendications 6 à 11, **caractérisé en ce que** l'organe de blocage comprend un élément de poussée (34) qui est mobile dans la direction d'ouverture du corps de fermeture (30) du clapet antiretour et qui est susceptible d'être appliqué contre ce corps de fermeture (30) dans le corps de valve (17).

13. Dispositif anti-reflux selon la revendication 12, **caractérisé en ce que** l'élément de poussée (34) est susceptible d'être introduit dans le boîtier (2) à travers l'entrée (5).

14. Dispositif anti-reflux selon la revendication 13, **caractérisé en ce que** l'élément de poussée comprend un tronçon tubulaire (35).

15. Dispositif anti-reflux la revendication 14, **caractérisé en ce que** le tronçon tubulaire (35) fait partie d'un manchon de raccordement à l'entrée (5), qui peut être en liaison avec une conduite d'alimentation.

16. Dispositif anti-reflux selon l'une des revendications 12 à 15, **caractérisé en ce que** le corps de fermeture (30) comprend dans le corps de valve (17) une butée qui limite son mouvement d'ouverture par rapport au corps de valve (17), de sorte que lors de l'avance de l'élément de poussée (34) d'un trajet supérieur à la course du corps de fermeture (30) dans le corps de valve (17), le corps de fermeture (30) déplace le corps de valve (17) jusque dans sa position de fermeture.

17. Dispositif anti-reflux selon l'une des revendications 12 à 15, **caractérisé en ce que** l'élément de poussée (34) vient s'appliquer tout d'abord contre le corps de fermeture (30) du clapet antiretour agencé dans le corps de valve (17) et, uniquement après son déplacement dans la position d'ouverture, il vient s'appliquer également contre le corps de valve (17).

18. Dispositif anti-reflux selon la revendication 17, **caractérisé en ce que** le corps de fermeture (30) porte une saillie (33) qui dépasse au-delà du corps de valve (17) et contre laquelle vient en appui l'élément de poussée (34).
